# EUROPEAN PATENT APPLICATION

(11) **EP 1 775 679 A1**
(43) Date of publication of application: **18.04.2007**
(21) Application number: 05090286.5
(22) Date of filing: 14.10.2005
(51) Int. Cl.: G06T 1/00

(54) **Embedding and detecting a watermark in an audio or video bit stream**

(71) Applicant: DEUTSCHE THOMSON-BRANDT GMBH, 78048 Villingen-Schwenningen (DE)
(72) Inventor: Schiller, Harald, 30539 Hannover (DE)
(74) Representative: Hartnack, Wolfgang

(57) **Abstract**

In watermarking digital audio/video data, typically a small item of identification information is embedded into the signal. In various watermarking techniques, the watermark data are arranged in a cyclical manner in the audio data. However, when repetitive identification information is watermarked into the signal the difference between the unwatermarked audio and the watermarked audio exhibits periodic patterns which may become audible. To avoid increased audibility of such watermarks, the identification data are scrambled using an n-bit-to-m-bit mapping, where m>n, and from the candidate m-bit words one is selected randomly.

## Description

The invention relates to a method and to an apparatus for watermarking a bit stream using identification data and an n-bit-to-m-bit mapping of data words, and for regaining identification data from a watermarked bit stream using an m-bit-to-n-bit mapping of the data words.

### Background

In watermarking digital audio/video (AV) data, typically a small item of identification information is inserted into audio or video or both, by embedding it in a way that it is un-perceivable by humans but machine detectable and resilient to usual AV processing like recording or format conversion.
This is especially being done for small batches of advanced copies of planned mass market movies to selected audiences like journalists or price nominees. In that way illegal copies of such material can be traced back to the individual who has broken confidentiality.

### Invention

In various watermarking techniques, the watermark data are arranged in a cyclical manner in the audio or video data. In this way it is ensured that even incomplete pieces or subsets of the original AV material contain useful watermark data from which the identification information can be retrieved. However, when repetitive identification information is watermarked into the audio stream of AV material, it is being observed that the resulting watermark signal, i.e. the difference signal between the un-watermarked audio and the watermarked audio, exhibits periodic patterns which may become audible. The watermark signal then has a constant base frequency plus a slowly varying spectrum of strong overtones (i.e. multiples of the base frequency). This special nature of the watermarked signal causes an increased audibility because it is known from audio physiology that the human ear is more sensitive to periodic signals than to noise-like signals. The periodicity will be even stronger if the identification information being watermarked is of a simple binary pattern like "0000000001111111" for the case of a 16-bit identification information format.

A problem to be solved by the invention is to decrease audibility or visibility of watermarked audio or video signals, respectively, thereby keeping the original strength of the watermarking. This problem is solved by the methods disclosed in claims 1 and 3. Apparatuses that utilise these methods are disclosed in claims 2 and 4.

To avoid increased audibility of audio watermarks containing repetitive identification data, the identification data are scrambled. A scrambling procedure is applied which does not require more synchronism than is anyway needed for watermark detection. Namely, the identification information is processed by an n-bit-to-m-bit mapping, where m>n. To each possible n-bit symbol occurring in the original identification information, a set of one or more symbols of typically m-bit word length are pre-defined and associated. Advantageously, the m-bit symbols are made pseudo-random like, and the symbols among the set of symbols associated to any one n-bit symbol are chosen as dissimilar to each other as possible. Identification information items are translated into m-bit symbols, and during this translation, for any given n-bit symbol, to which more than one m-bit symbol has been assigned, the specific m-bit symbol to be used for it is randomly selected from the associated set.
Regardless of which m-bit symbol has been chosen in the mapping, the corresponding inverse mapping can be performed without any synchronism requirements and will retrieve the original identification information.

Even for periodic identification information, the resulting watermark signal is non-periodic and hence less perceivable. This comes at the price of an increased symbol word length (m bit instead of n) which normally is acceptable in the context of watermarking identification information.

In principle, the inventive method is suited for watermarking a bit stream using identification data, said method including the steps:
- generating original identification data as a sequence of n-bit data words;
- embedding said identification data into sections or frames of said bit stream so as to form a watermarked bit stream thereof,
- wherein, controlled by a random generator, mapping said original n-bit data words to m-bit data words and embedding said identification data as a sequence of m-bit data words into said bit stream, wherein 'm' is greater than 'n'.

In principle the inventive apparatus is suited for watermarking a bit stream using identification data, said apparatus including:
- means being adapted for generating original identification data as a sequence of n-bit data words;
- means being adapted for mapping said original n-bit data words to m-bit data words, wherein said mapping means are controlled by a random generator and wherein 'm' is greater than 'n';
- means being adapted for embedding said m-bit identification data words into sections or frames of said bit stream so as to form a watermarked bit stream thereof.

In principle, the inventive method is suited for regaining identification data from a watermarked bit stream, wherein the watermarking was carried out by generating original identification data as a sequence of n-bit data words and, controlled by a random generator, by mapping said original n-bit data words to m-bit data words wherein 'm' was greater than 'n', and by embedding said m-bit identification data words into sections or frames of said bit stream so as to form a watermarked bit stream thereof, said method including the steps:
- using correlation or matched filtering of said sections or frames of said watermarked bit stream with candidate m-bit data words, extracting said identification data from said watermarked bit stream as a sequence of m-bit data words;
- mapping said m-bit data words to n-bit data words representing said original identification data, wherein 'n' is smaller than 'm'.

In principle the inventive apparatus is suited for regaining identification data from a watermarked bit stream, wherein the watermarking was carried out by generating original identification data as a sequence of n-bit data words and, controlled by a random generator, by mapping said original n-bit data words to m-bit data words wherein 'm' was greater than 'n', and by embedding said m-bit identification data words into sections or frames of said bit stream so as to form a watermarked bit stream thereof, said apparatus including:
- means being adapted for extracting, using correlation or matched filtering of said sections or frames of said watermarked bit stream with candidate m-bit data words, said identification data from said watermarked bit stream as a sequence of m-bit data words;
- means being adapted for mapping said m-bit data words to n-bit data words representing said original identification data, wherein 'n' is smaller than 'm'.

Advantageous additional embodiments of the invention are disclosed in the respective dependent claims.

### Drawings

Exemplary embodiments of the invention are described with reference to the accompanying drawings, which show in:
- Fig. 1: simplified block diagram of a known watermark encoder;
- Fig. 2: simplified block diagram of a known watermark decoder;
- Fig. 3: simplified block diagram of an inventive watermark encoder;
- Fig. 4: simplified block diagram of an inventive watermark decoder.

### Exemplary embodiments

To avoid increased audibility of audio watermarks containing repetitive identification data, the identification data are scrambled. Normally in digital signal processing, scrambling is performed by bitwise exor-ing a bit sequence with a pre-defined pseudo-random sequence. This has the drawback that for correctly un-scrambling the watermark signal again, the watermark detector would have to operate in a synchronous manner with this underlying pseudo-random sequence. With other words, the start positions of the pseudo-random sequence must be known or deductible. This is incompatible with the application scenario of watermarking, where reliable watermark detection is required even from truncated or cropped copies of the bitstream.

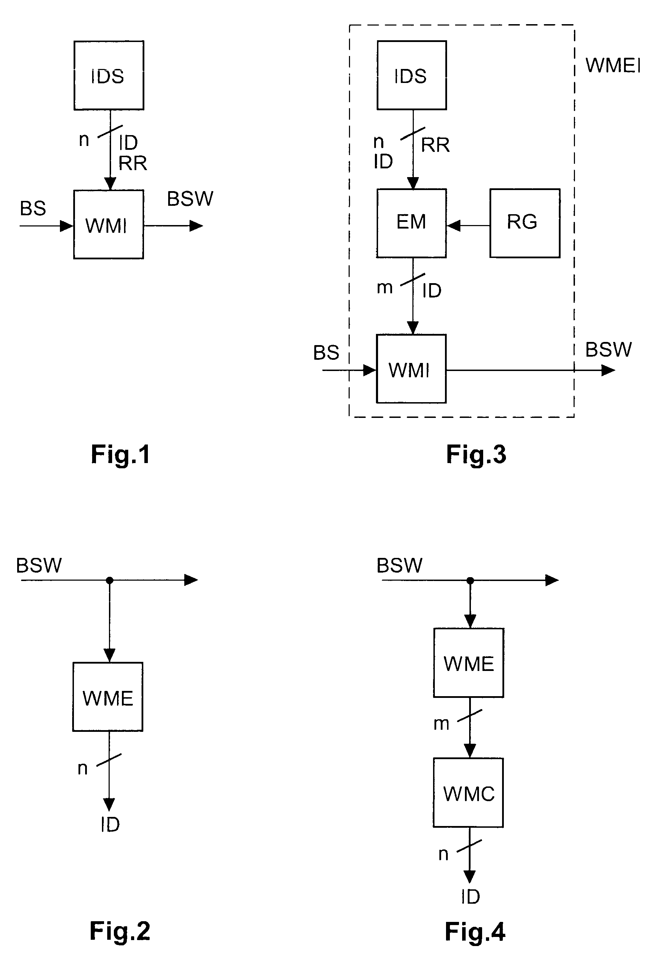

In the known watermark encoder in Fig. 1, an identification sequence IDS (i.e. a sequence of symbols from an n-bit alphabet) is repeatedly read out RR as n-bit data words from a corresponding unit. The ID data are fed to a watermark insertion unit WMI which may encode the ID data and which embeds the encoded ID data in a bit stream BS to be watermarked and outputs the watermarked bit stream BSW.

In the known watermark decoder in Fig. 2, the watermarked bit stream BSW is fed to a corresponding watermark extraction unit WME which may decode the encoded ID data and which outputs the n-bit data words of the ID data.

According to the invention, the same effect like scrambling a periodic bit sequence in order to transform it into something unperiodic can be achieved by applying an n-bit-to-m-bit mapping, where m>n, as follows:
Assume the original identification information to be watermarked into a data stream has a format of n bits, i.e. is taken from a first alphabet comprising 2ⁿ symbols. Then a second alphabet of 2^{m} symbols, m>n, is defined and a mapping is carried out between the symbols of the first and the second alphabet, in which mapping at least one symbol of the second alphabet is associated with each symbol of the first alphabet. Advantageously, in this mapping, those symbols of the first alphabet that are known to occur more often than others should be mapped to symbols of the second alphabet which are each of a pseudo-random nature, e.g. by assigning a higher-than-average number of candidate m-bit words to a given n-bit word. Also, the set of symbols of the second alphabet that is mapped to any one symbol of the first alphabet should be as dissimilar to each other as possible.
Given these definitions, the watermarking process is as follows:
Each item of identification information to be watermarked into a bit stream is first translated into symbols of the second alphabet. During this translation, for any given symbol from the first alphabet, the specific symbol from the second alphabet to be used for it, can and should be randomly selected.
For example, if n=8 and m=10, there are different possibilities:
   a) At transmitter side, to each n-bit word four (i.e. 2^{(m-n)}) m-bit words are assigned, one of which is selected by a random generator. The bit stream signal (e.g. audio signal) is processed section by section or frame by frame, whereby to a section or frame one or more watermarking bits can be assigned.
      At receiver side, all possible assignments for each n-bit word are known. Each bit stream signal section or frame is correlated (or matched filtered) with all m-bit words and the valid m-bit word is determined according to the best correlation (or matched filter) result. If the peak magnitude of the best correlation result (or the matched filter output) is smaller than a pre-determined threshold it is assumed that no watermark had been assigned at transmitter side to the current section or frame.
   b) At transmitter side, to each n-bit word one or more m-bit word/s is/are are assigned, of which one is selected by a random generator. The bit stream signal (e.g. audio signal) is processed section by section or frame by frame, whereby to a section or frame one or more watermarking bits can be assigned.
      At receiver side, all possible assignments for each n-bit word are known. Each bit stream signal section or frame is correlated (or matched filtered) with all candidate m-bit words and the valid m-bit word is determined according to the best correlation (or matched filter) result. If the peak magnitude of the best correlation result (or the matched filter output) is smaller than a predetermined threshold it is assumed that no watermark bit had been assigned at transmitter side to the current section or frame.
   c) At transmitter side, the processing is as described in a) or b), but in addition a pre-determined watermark synchronisation word is arranged in at least the sections or frames that carry a watermark information.
      At receiver side, all possible assignments for each n-bit word and the watermark synchronisation word are known. The watermark synchronisation word is determined. Only in the sections or frames carrying a watermark synchronisation word the correlation (or matched filtering) with all candidate m-bit words and the valid m-bit word is determined according to the best correlation result (or matched filter output).

In the watermark encoder in Fig. 3, an identification sequence IDS (i.e. a sequence of symbols from an n-bit alphabet) is repeatedly read out RR as n-bit data words from a corresponding unit. The ID data pass through an expansive mapping stage EM to a watermark insertion unit WMI which may encode the expanded ID data and which embeds the encoded expanded ID data in a bit stream BS to be watermarked and outputs the watermarked bit stream BSW. The encoding results in a hiding of the ID data at portions of the bitstream where it is difficult to detect them. The expansive mapping stage EM is controlled by a random generator RG and performs the above-described n-bit-to-m-bit mapping of the ID data words, m>n.

The stages or units IDS, EM, RG and WMI together form a watermark expansion and insertion unit WMEI that can operate in different contexts. It is not only useful for avoiding in PCM audio data the occurrence of repetitive identification data by replacing it by something random or pseudo-random, it may also be used against statistical attacks on the watermark.
Hence, in a generalised setup, the bit stream BS to be watermarked may be any kind of bitstream, uncompressed or compressed, audio or video or other.
For PCM data, watermarking will modify the values of some samples in a subtle way deemed to be scarcely audible/visible.
For compressed data, watermarking may use parts of the bit stream the content of which is known not to influence the decoder output. Such parts are e.g. reserved data fields or fields the info of which is known typically to be read from another, duplicate entry. This kind of watermark is suitable to identify a compressed bitstream, but will of course not survive a transition into or through the analog domain.
For compressed data, another approach of watermark may deliberately insert errors into the bitstream that are known to be correctable by an ECC scheme anyhow involved in the context of recoding/transmission. This will allow to identify straightforward bit-by-bit copies, but not "intelligent" ones.

In the watermark decoder in Fig. 4, the watermarked bit stream BSW is fed to a corresponding watermark extraction unit or stage WME which may decode the encoded ID data and which outputs the m-bit data words of the ID data. These m-bit data words pass through a watermark data collapsing unit or stage WMC which carries out a correspondingly inverse m-bit-to-n-bit mapping of the ID data words, n<m.

The WMI and WME stages or units may use any known watermarking technique for inserting or regaining, respectively, the watermark information bits into the original bit stream BS or from the watermarked bit stream BSW, respectively.

## Claims

1. Method for watermarking a bit stream (BS) using identification data (ID), said method including the steps:
- generating (IDS) original identification data as a sequence of n-bit data words;
- embedding (WMI) said identification data into sections or frames of said bit stream (BS) so as to form a watermarked bit stream (BSW) thereof,
**characterised by**
- controlled by a random generator (RG), mapping (EM) said original n-bit data words to m-bit data words and embedding (WMI) said identification data as a sequence of m-bit data words into said bit stream (BS), wherein 'm' is greater than 'n'.

2. Apparatus for watermarking a bit stream (BS) using identification data (ID), said apparatus including:
- means (IDS) being adapted for generating original identification data as a sequence of n-bit data words;
- means (EM) being adapted for mapping said original n-bit data words to m-bit data words, wherein said mapping means are controlled by a random generator (RG) and wherein 'm' is greater than 'n';
- means (WMI) being adapted for embedding said m-bit identification data words into sections or frames of said bit stream (BS) so as to form a watermarked bit stream (BSW) thereof.

3. Method for regaining identification data (ID) from a watermarked bit stream (BSW), wherein the watermarking was carried out by generating original identification data as a sequence of n-bit data words and, controlled by a random generator, by mapping said original n-bit data words to m-bit data words wherein 'm' was greater than 'n', and by embedding said m-bit identification data words into sections or frames of said bit stream so as to form a watermarked bit stream (BSW) thereof, said method including the steps:
- using correlation or matched filtering of said sections or frames of said watermarked bit stream with candidate m-bit data words, extracting (WME) said identification data from said watermarked bit stream as a sequence of m-bit data words;
- mapping (WMC) said m-bit data words to n-bit data words representing said original identification data (ID), wherein 'n' is smaller than 'm'.

4. Apparatus for regaining identification data (ID) from a watermarked bit stream (BSW), wherein the watermarking was carried out by generating original identification data as a sequence of n-bit data words and, controlled by a random generator, by mapping said original n-bit data words to m-bit data words wherein 'm' was greater than 'n', and by embedding said m-bit identification data words into sections or frames of said bit stream so as to form a watermarked bit stream (BSW) thereof, said apparatus including:
- means (WME) being adapted for extracting (WME), using correlation or matched filtering of said sections or frames of said watermarked bit stream with candidate m-bit data words, said identification data from said watermarked bit stream as a sequence of m-bit data words;
- means (WMC) being adapted for mapping said m-bit data words to n-bit data words representing said original identification data (ID), wherein 'n' is smaller than 'm'.

5. Method according to claim 1 or 3, or apparatus according to claim 2 or 4, wherein to each n-bit word a number of 2^{(m-n)} m-bit words are assigned (EM), of which one is randomly selected (RG).

6. Method according to claim 1 or 3, or apparatus according to claim 2 or 4, wherein to each n-bit word a specific number of m-bit words is assigned (EM) of which one is randomly selected (RG).

7. Method or apparatus according to claim 6, wherein to a given n-bit word that is known to occur more frequently than others a higher-than-average quantity of candidate m-bit words is assigned (EM).

8. Method according to one of claims 1, 3 and 5 to 7, or apparatus according to one of claims 2 and 4 to 7, wherein each section or frame of said bit stream carrying at least one watermark bit also includes a pre-determined watermark synchronisation word.

9. Storage medium, for example on optical disc, that contains or stores, or has recorded on it, a digital audio and/or video signal encoded according to the method of one of claims 1 and 5 to 8.

10. A bit stream (BSW) that is watermarked according to the method of one of claims 1 and 5 to 8.
